# EUROPEAN PATENT APPLICATION

(11) **EP 4 789 571 A1**
(43) Date of publication of application: **12.08.2026**
(21) Application number: 26157650.8
(22) Date of filing: 10.02.2026
(51) Int. Cl.: A43B 17/00, A43B 1/00

(54) **SHOE INSERT AND METHOD FOR MANUFACTURING A SHOE INSERT**

(30) Priority: 10.02.2025 PL 45117525
(71) Applicant: Czarnecki, Witold Krzysztof, 93-564 Lodz (PL)
(72) Inventor: Czarnecki, Witold Krzysztof, 93-564 Lodz (PL)
(74) Representative: Basck Limited

(57) **Abstract**

The invention relates to an insert (6) for footwear, comprising a top linen layer (1) made of a flat-laid linen fabric having a basis weight of 100-200 g/m², an inner linen layer (2) made of a flat-laid linen fabric having a basis weight of 300-600 g/m², and a bottom linen layer (3) bonded to the inner linen layer (2) wherein at least the top linen layer (1) and the inner linen layer (2) are stitched together by seams (5) formed using machine stitching, and the bottom linen layer (3) is a layer of linen fabric having a basis weight of 200-300 g/m² and is coated with an anti-slip substance on the side opposite the side connected to the inner linen layer. The invention relates also to a method for manufacturing a shoe insert, comprising the steps of applying an anti-slip substance on the bottom linen layer (3), binding at least the top and the inner linen layer by machine stitching, and gluing the bottom linen layer (3), and cutting the bonded layers (1, 2, 3) into the shape of the insert (6) using a cutting machine.

## Description

The invention relates to an insert for footwear, intended in particular for use in the fields of hygiene, foot comfort, rehabilitation, podiatry, as well as preventive healthcare and sports. Furthermore, the invention also relates to a method for manufacturing the footwear insert.

The use of shoe inserts is a well-known way of increasing the comfort of wearing footwear; in many cases, it also helps to minimize foot-related ailments and improve walking comfort.

One of the important factors associated with the selection of shoe inserts is maintaining foot hygiene. Maintaining hygiene is particularly important when footwear is worn on bare feet and direct contact occurs between the skin and the insert. The feet contain numerous sweat glands; therefore, it is essential that the inserts provide adequate ventilation and hygiene. Furthermore, when footwear is used without socks, an important factor is the level of comfort perceived at the moment of contact between the skin of the foot and the surface of the insert. For the user of the inserts, it is important that the sensation of contact between the skin and the material of the insert, which is in direct contact with the foot, is positive.

Moreover, for hygiene reasons, it is advantageous if the shoe insert is washable and does not lose its properties during washing, thereby allowing it to be kept clean.

There is therefore a need to provide shoe inserts that enable the maintenance of hygiene in footwear and ensure comfort upon contact between the skin of the foot and the surface of the insert. Furthermore, there is a need to provide a shoe insert that is suitable for repeated washing without losing its properties.

Shoe inserts comprising a linen layer combined with a cork layer are known in the prior art. A drawback of this solution is the low washing resistance of the cork insert. Cork is not very durable; under the influence of washing, the cork layer crumbles and disintegrates. Furthermore, an insert comprising a cork layer exhibits low flexibility and may be too hard for many users, in particular when it is covered only with a thin top layer of linen.

According to the invention, the shoe insert is characterized in that it comprises a top linen layer made of a flat-laid linen fabric having a basis weight of 100-200 g/m², an inner linen layer made of a flat-laid linen fabric having a basis weight of 300-600 g/m², and a bottom linen layer bonded to the inner linen layer wherein at least the top linen layer and the inner linen layer are stitched together by seams formed using machine stitching, and the bottom linen layer is a layer of linen fabric having a basis weight of 200-300 g/m² and is coated with an anti-slip substance on the side opposite the side connected to the inner linen layer.

Using multiple layers offers many advantages; in particular, the top layer helps wick away sweat and odours, and provide a foot massage, the inner layer may act as a moisture buffer, while the bottom layer prevents the insert from shifting inside the shoe.

Preferably, the bottom linen layer is bonded to the inner linen layer by means of an adhesive layer. Alternatively, the top layer, the inner layer, and the bottom layer are joined by stitching (for example, all three layers are stitched together simultaneously).

Preferably, the layers are stitched together using a chain stitch and/or a lockstitch.

Preferably, the seams may be made parallel to one another or non-parallel to one another, for example at an angle, at any desired inclination. The seams may also be formed as straight, curved, rounded, oblique, or zigzag lines.

All of the above-mentioned types of stitching may also be applied when all three layers are stitched together simultaneously.

Preferably, the top linen layer and the inner linen layer are stitched together with parallel seams; even more preferably, the shoe insert comprises seams made parallel to the longitudinal axis of the insert.

Preferably, the insert comprises parallel seams made at intervals from 4 mm to 10 mm from each other, more preferably the insert comprises parallel seams made at intervals of 4 mm to 7 mm from each other, even more preferably the insert comprises parallel seams made at intervals 4,8 mm or 5,6 mm or 6,4 mm from each other.

Preferably, the insert comprises seams in the form of repeating zigzag lines, and even more preferably, these lines are parallel to one another.

Preferably, the insert comprises seams extending transversely or obliquely to the longitudinal axis of the insert, more preferably arranged parallel to one another.

Preferably, the insert comprises an adhesive layer, which is a copolymer nonwoven.

Preferably, the insert comprises an anti-slip substance that is biodegradable.

Preferably, the top linen layer is made of a linen fabric having a basis weight of 100-150 g/m², more preferably the top linen layer is made of a linen fabric having a basis weight of 120 g/m².

Preferably, the insert comprises the inner linen layer having a basis weight of 420 g/m² or 500 g/m².

Preferably, the insert comprises the bottom linen layer having a basis weight of 220 g/m².

Preferably, the edge of the insert is finished with a binding.

Preferably, the top layer is pleated.

The invention relates to a method for manufacturing a shoe insert, characterized in that it comprises the steps:
a. application of anti-slip substance in the form of a film on the bottom linen layer;
b. binding the top linen layer, the inner linen layer, and the bottom linen layer by machine stitching at least the top and the inner linen layer, and gluing the bottom linen layer by the side opposite the side on which the anti-slip substance was applied to, to the inner linen layer, or by machine stitching all three layers together;
c. cutting the bonded layers into the shape of the insert using a cutting machine.

The adhesive layer may be in the form of a copolymer nonwoven fabric or a layer of hot-melt adhesive, and is applied to the bottom linen layer, on the side opposite to the side to which the anti-slip substance has been applied. The adhesive layer stiffens and bonds the layers together. In alternative embodiments, other stiffening elements may be used.

If all three layers are stitched together, an additional stiffening layer may be used instead of the adhesive layer.

Preferably, stitching is done using a chain stitch or a lockstitch.

Preferably, the thickness of the anti-slip substance film is tailored to the type of footwear for which the shoe insert is intended.

Preferably, the method for manufacturing a shoe insert is characterized in that it comprises the steps:
a. application of anti-slip substance in the form of a film on the bottom linen layer (3);
b. binding the top linen layer (1) with the inner linen layer (2) by machine stitching, preferably using a chain stitch;
c. application of the adhesive layer on the bottom linen layer by the side opposite to the side on which the anti-slip substance was applied to;
d. joining the layer assembly obtained in step (b) to the bottom linen layer in such a way that the inner linen layer is connected, by the side opposite to the side adjacent to the top linen layer, with the bottom linen layer from the adhesive layer side, and the joining is done by heat sealing and pressing at a temperature of 180-200 degrees;
e. cutting the bonded layers into the shape of the insert; and/or
f. trimming with a binding.

Preferably, the method according to the invention, further comprises a step of pleating at least the top linen layer by applying seams, preferably with a chain stitch.

Preferably, the thickness of the anti-slip substance film should be tailored to the type of footwear for which the insert is intended.

The steps of pleating and application of the anti-slip substance can be performed in any order.

In the context of the present invention, "pleating" refers to the controlled formation of a material layer into an arrangement of alternating folds, involving localized bending of the material along a stitching line, resulting in a structure with increased volume and enhanced air permeability and moisture absorption, while maintaining the continuity of the material. In the invention, the top layer is pleated and sewn to the inner layer. The pleats also provide a gentle peeling effect.

The shoe insert according to the invention, by using a natural material such as linen and due to its construction, improves ventilation and facilitates the maintenance of proper foot hygiene. The inserts are intended for repeated washing and retain their properties after washing. The insert according to the invention can also be used over other inserts, such as orthopaedic ones, since it is thin and does not interfere with, among other things, the ability to feel the contours of an orthopaedic insert. Because the insert does not shift, it can also be used in open footwear (even flip-flops), sports shoes, and barefoot-style shoes. Suitable shapes adapted to the type of footwear are also within the scope of the invention.

The method of manufacturing the insert according to the invention allows for the production of an insert with improved ventilation, thanks to the use of a combination of design and manufacturing features.

### BRIEF DESCRIPTION OF THE FIGURES

In non-limiting embodiments, the shoe insert according to the invention is illustrated in the figures, in which:
Fig. 1A shows a top view of the insert according to the invention, illustrating stitches made parallel to the longitudinal axis of the insert;
Fig. 1B shows a bottom view of the insert according to the invention in a variant where the bottom layer is bonded to the inner layer via an adhesive layer;
Fig. 1C shows a top view of the insert according to the invention, illustrating seams in the form of repeating zigzag lines;
Fig. 1D shows a top view of the insert according to the invention, illustrating parallel seams made transversely to the longitudinal axis of the insert;
Fig. 2 shows a top view of the insert according to the invention after washing;
Fig. 3 shows an exploded view of the insert according to the invention in an embodiment containing an adhesive layer;
Fig. 4A shows the structure of an insert comprising a pleated top layer in a three-layer stitching variant without an adhesive layer;
Fig. 4B shows a top view of any insert with a pleated top layer;
Fig. 4C shows a photograph of any insert with a pleated top layer;
Fig. 5 shows the structure of an insert comprising a pleated top layer in the variant of stitching two layers and gluing the bottom layer;
Fig. 6 shows the structure of an insert comprising a pleated top layer in the variant of stitching the top layer, the inner layer, the adhesive layer, and the bottom layer.

### DETAILED DESCRIPTION OF THE FIGURES AND EMBODIMENTS

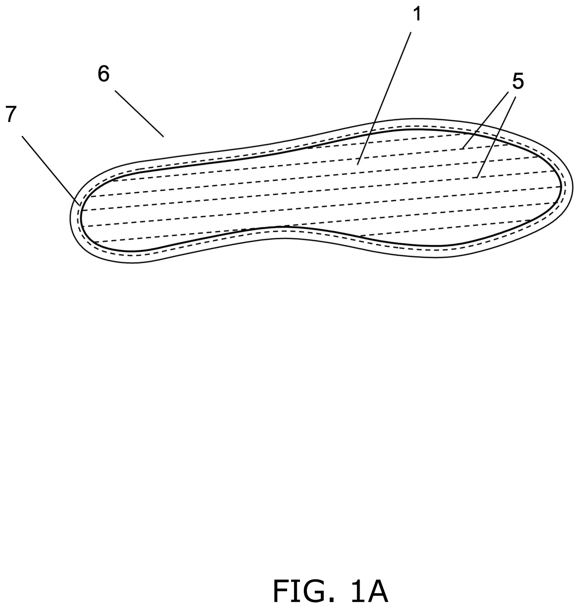

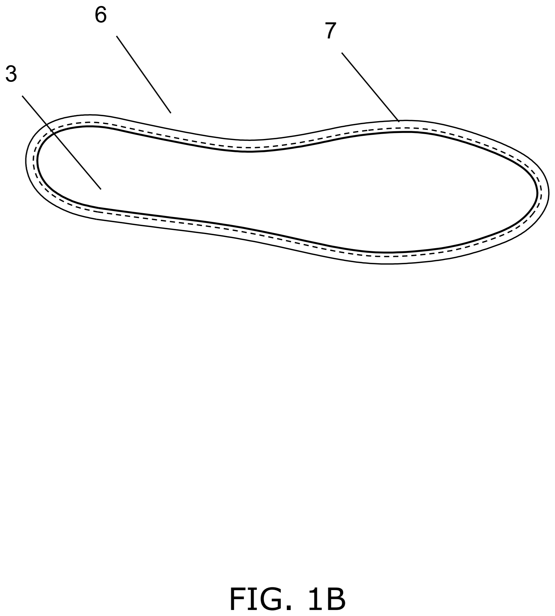

In a non-limiting embodiment, Fig. 1A shows a top view of the shoe insert 6 according to the invention, while Fig. 1B shows a bottom view of the shoe insert 6 according to the invention.

In Fig. 1A, the top linen layer 1 is visible, showing the parallel seams 5. The insert 6 may have a top linen layer 1 with a basis weight of 100-200 g/m². The top linen layer 1 is the layer in contact with the foot. In a preferred embodiment, the top linen layer 1 has a basis weight of 100-150 g/m². In the most preferred embodiment, the top linen layer 1 has a basis weight of 120 g/m². In a preferred embodiment, the parallel seams 5 are made along the longitudinal axis of the insert, at intervals from 4 mm to 10 mm from each other, at equal or varying intervals between the individual seams. In an alternative embodiment, the shoe insert 6 comprises parallel seams 5 made at intervals from 4 mm to 7 mm from each other. In alternative embodiments, the insert 6 comprises parallel seams 5 made at intervals 4,8 mm or 5,6 mm or 6,4 mm from each other. Other distances between the seams are also possible. In a non-limiting embodiment, insert 6 is edged with binding 7.

In Fig. 1B, the bottom layer 3 is visible, in a variant in which the bottom linen layer 3 is bonded to the inner linen layer 2 by means of an adhesive layer 4. In a non-limiting embodiment, the insert 6 is edged with a binding 7.

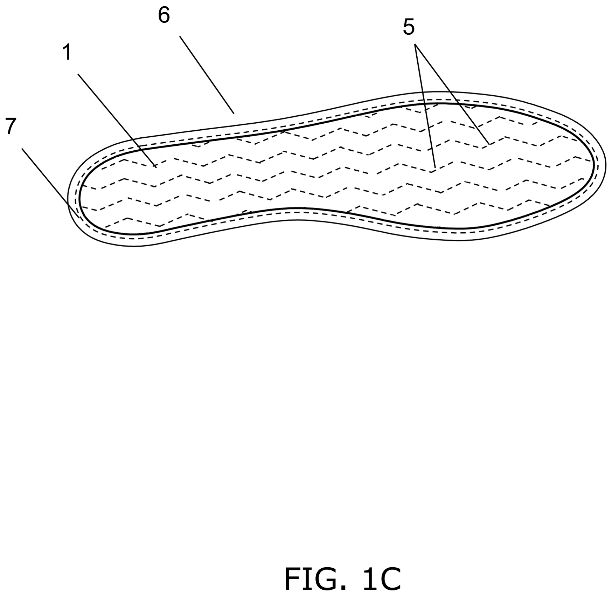

In Fig. 1C, the top linen layer 1 is visible, with visible parallel seams 5 in the form of repeating zigzag lines. The zigzag lines are spaced at intervals 4 mm to 10 mm from each other, at equal or varying intervals between them. Alternatively, the insert 6 comprises zigzag lines made at intervals from 4 mm to 7 mm from each other. In alternative embodiments, the insert 6 comprises zigzag lines made at intervals 4,8 mm or 5,6 mm or 6,4 mm from each other. Other distances between the seams are also possible. The insert 6 may comprise the top (foot-contact) linen layer 1 with a basis weight of 100-200 g/m². In a preferred embodiment, the top linen layer 1 has a basis weight of 100-150 g/m². In a particularly advantageous embodiment, the top linen layer 1 has a basis weight of 120 g/m².

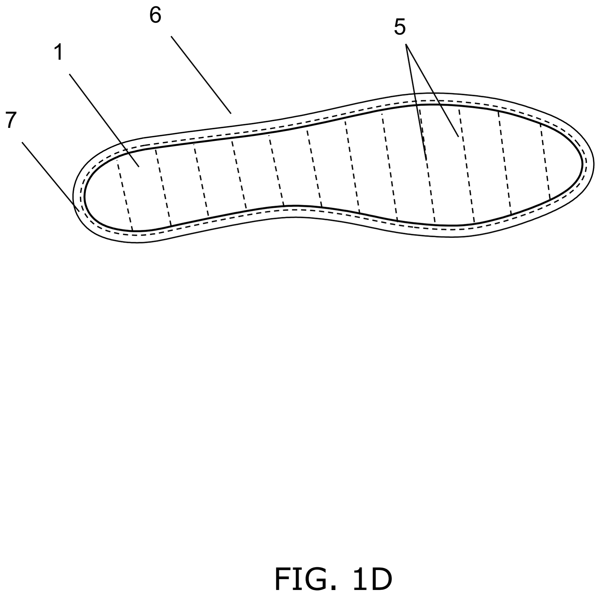

In Fig. 1D, the top linen layer 1 is visible, with visible parallel seams 5, made perpendicular to the longitudinal axis of the insert. The insert 6 comprises the top linen layer 1 with a basis weight of 100-200 g/m². The top linen layer 1 is the layer in contact with the foot. In a preferred embodiment, the top linen layer 1 has a basis weight of 100-150 g/m². In a particularly advantageous embodiment, the top linen layer 1 has a basis weight of 120 g/m².

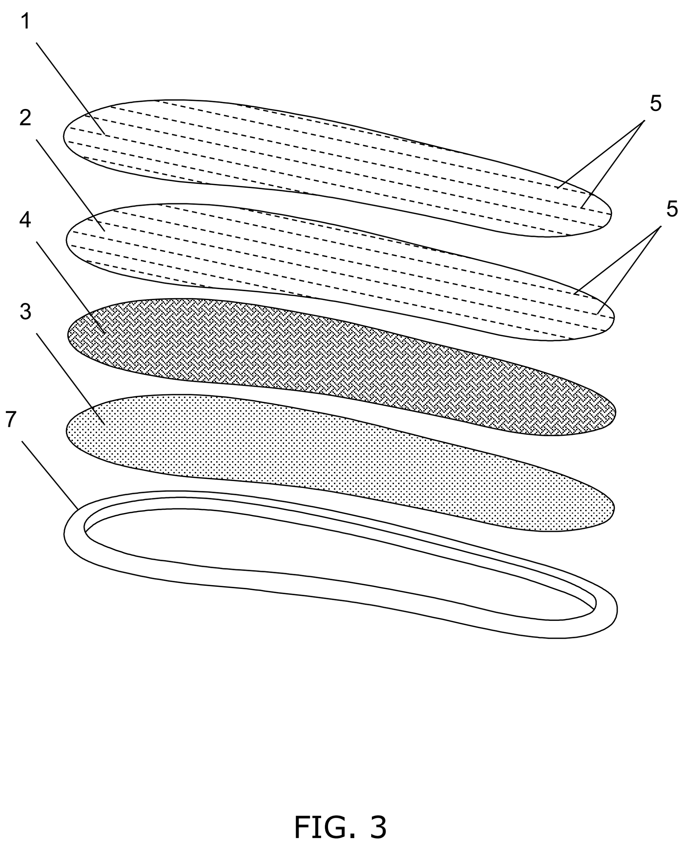

The inner linen layer 2 is arranged beneath the top linen layer 1. The top linen layer 1 and the inner linen layer 2 (the inner linen layer 2 is shown in Fig. 3 are connected by parallel seams 5. The parallel seams 5 are made along the insert 6 using a machine stitch. In an alternative embodiment, the parallel seams 5 are made along the insert 6 using a chain stitch and/or a lockstitch. The spacing between the parallel seams 5 is at least 4 mm. In a preferred embodiment, the spacing between the parallel seams 5 is 5 mm. Preferably, the spacing between the parallel seams 5 is 6 mm. In alternative embodiments, spacings other than those indicated above are also possible, with a preferred range of 4 mm to 10 mm.

The top linen layer 1 is made of flat-laid linen fabric. The term "flat-laid fabric" refers to a fabric laid in a single layer without tension. In a preferred embodiment, the top linen layer 1 includes extra material that allows the insert to be pleated.

In a non-limiting embodiment, the top linen layer 1 is joined to the inner linen layer 2, and these two layers, which are sewn together, are then joined to the bottom linen layer 3 by means of an adhesive layer 4. Thus, the inner linen layer 2 is connected with its top surface to the bottom surface of the top linen layer 1 and with its bottom surface to the top surface of the bottom linen layer 3. The terms "top" and "bottom" used in this disclosure with respect to the surfaces of the layers refer to the orientation of the insert during use, meaning that the top surface of a layer is the surface facing the foot during use. The basis weight of the inner linen layer 2 is 300-600 g/m². In a preferred embodiment, the basis weight of the inner linen layer 2 is 420 g/m² or 500 g/m². The basis weight of the bottom linen layer is 200-300 g/m². In a preferred embodiment, the basis weight of the bottom linen layer 3 is 220 g/m².

The bottom linen layer 3 is bonded to the inner linen layer 2, so the bottom of the insert 6 is smooth, as shown in Fig. 1B.

The inner linen layer 2 is the thickest due to its basis weight and, as a result, absorbs moisture the most.

The adhesive layer 4 is made of a copolymer nonwoven fabric or consists of a layer of hot-melt adhesive.

The chain stitch is classified as an elastic stitch, which means that when pressure is applied, it absorbs the force and does not affect the expansion of the joined layers.

In another embodiment, the seams are made using a lockstitch.

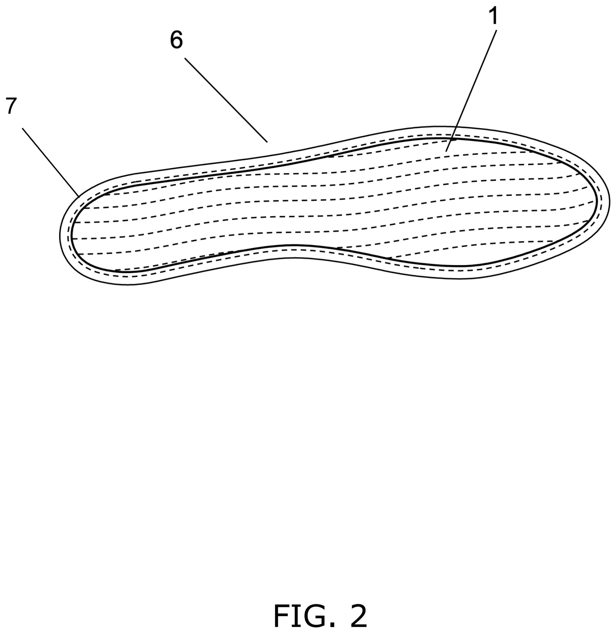

The basis weight of the top linen layer 1 is lower than that of the inner linen layer 2. By appropriately selecting the difference in basis weight between the top linen layer 1 and the inner linen layer 2, the layers shrink to different degrees after washing. The inner linen layer 2 shrinks the most after washing, while the top linen layer 1 shrinks minimally. Due to the natural relaxation of the material and the stitching of the top linen layer 1 to the inner linen layer 2 with multiple parallel seams 5, natural small folds form between the parallel seams 5 on the surface of the top linen layer 1. The shoe insert (6) with the wrinkling effect resulting from washing is shown in Fig. 2.

In a preferred embodiment, the parallel seams 5 are sewn along the insert. In the preferred embodiment, the parallel seams 5 are seams sewn along a straight line, along the insert. In a preferred embodiment, the parallel seams are sewn in a zigzag pattern or have a wavy shape.

In an alternative embodiment, the parallel seams 5 are seams sewn transversely across the insert.

The joining of the top linen layer 1 to the inner linen layer 2 using seams 5 made with a chain stitch ensures that the folds 5 of the outer linen layer 1 lie evenly after washing.

The natural small folds between the parallel seams 5 provide a massaging effect that becomes apparent after the first wash. The small folds that form on the top linen layer 1 provide a rough surface effect, giving the sensation of walking on sand, thus providing a natural massaging and/or peeling effect.

In a non-limiting embodiment, the bottom linen layer 3 is made of medium-weight linen fabric. The bottom linen layer 3 is impregnated on its underside with a substance that functions as an anti-slip agent, causing the insert, once moistened, to become supple and to stay flat in the shoe without curling, while adhering to the shoe. In a preferred embodiment, the anti-slip substance is biodegradable and retains its adhesive properties after each washing. The anti-slip substance is applied to the bottom surface of the bottom layer as a film. In a preferred embodiment, the anti-slip substance comprises an acrylic polymer. After each washing, the applied anti-slip substance retains its properties and does not wash off.

Fig. 3 shows an exploded view of the insert according to the invention. Visible are the top linen layer 1, the inner linen layer 2, the adhesive layer 4, the bottom linen layer 3, the binding 7, and the parallel seams 5.

The layers of the insert are bonded by thermal welding and compression at a temperature of 180-200 degrees Celsius. In a preferred embodiment, the bonding is performed at a temperature of 190 degrees Celsius.

In an alternative, non-limiting embodiment, the top linen layer 1, the inner linen layer 2, and the bottom linen layer 3 are stitched together.

In yet another embodiment, the top linen layer 1, the inner linen layer 2, the adhesive layer 4, and the bottom linen layer 3 are stitched together.

In the embodiment of the invention, additional layers may be inserted between the individual layers.

The insert of the invention may be manufactured by any method known in the art.

### EXAMPLE 1

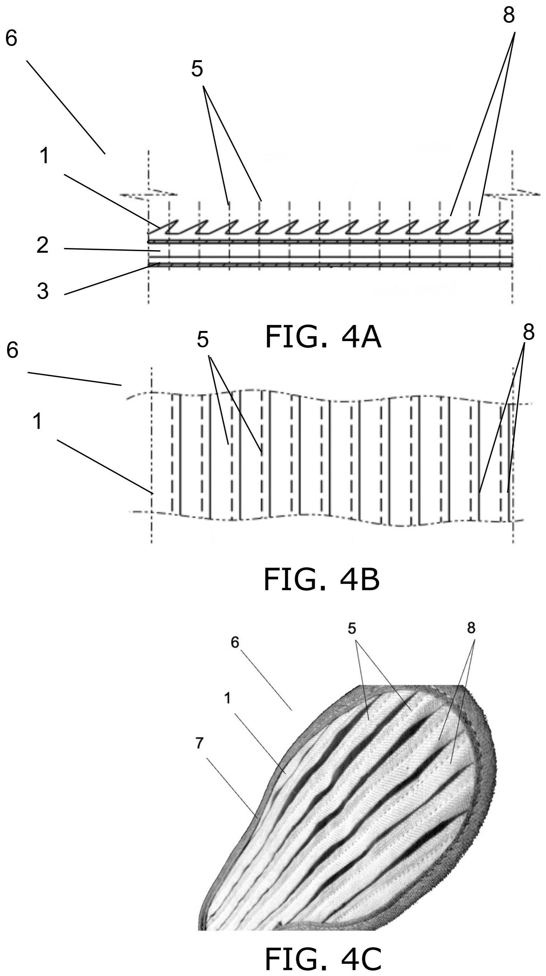

For example, in a non-limiting embodiment, a thin film (anti-slip substance) is applied to the bottom linen layer. Then, the layers are stacked sequentially: the bottom layer, the inner layer on top of it, and the top layer on the inner layer, with the bottom layer contacting the inner layer with the side opposite to the one bearing the anti-slip substance. Next, all layers are stitched together, preferably using a chain stitch or a lockstitch. In a subsequent step, the shape is cut to match the shape of the footwear, preferably using a cutting machine. In an alternative embodiment, the method may include an additional step in which the insert is finished with a binding. In another alternative embodiment, the stitching may include pleating 8 of the top layer, as shown in Figs. 4A-4C.

### EXAMPLE 2

In another embodiment, an anti-slip substance is applied in the form of a thin film to the bottom linen layer 3. The top linen layer 1 is then joined to the inner linen layer 2 by machine stitching, preferably using a chain stitch or a lockstitch. An adhesive layer is applied to the bottom linen layer, on the side opposite to the side on which the anti-slip substance was applied.

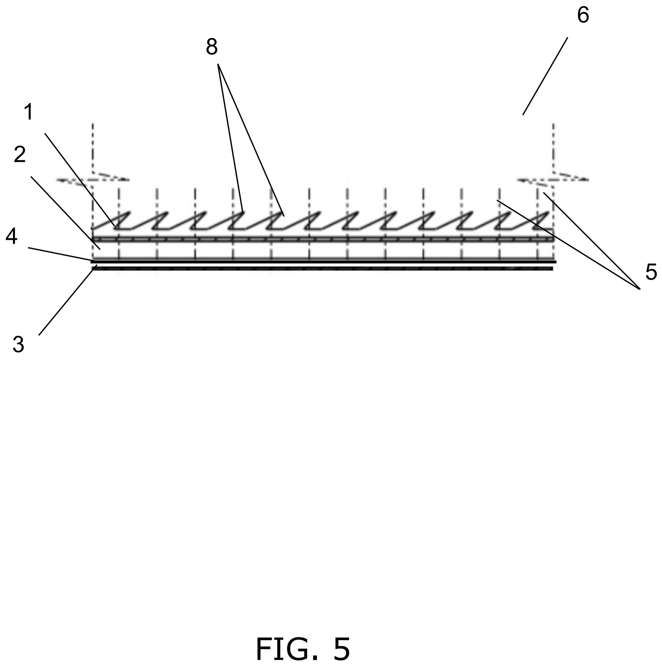

Next, the assembly of layers (inner and top) is bonded to the bottom linen layer in such a way that the inner linen layer is bonded with the side opposite the side adjacent to the top layer, to the bottom linen layer from the side of the adhesive layer, and the joining is performed by thermal bonding and pressing at a temperature of 180- 200 degrees. The joined layers are then cut into the shape of an insole and either put into use or edged with a binding (Fig. 3). Alternatively, in this embodiment, the top layer may be pleated. An example of pleat 8 in this version is shown in Fig. 5.

### EXAMPLE 3

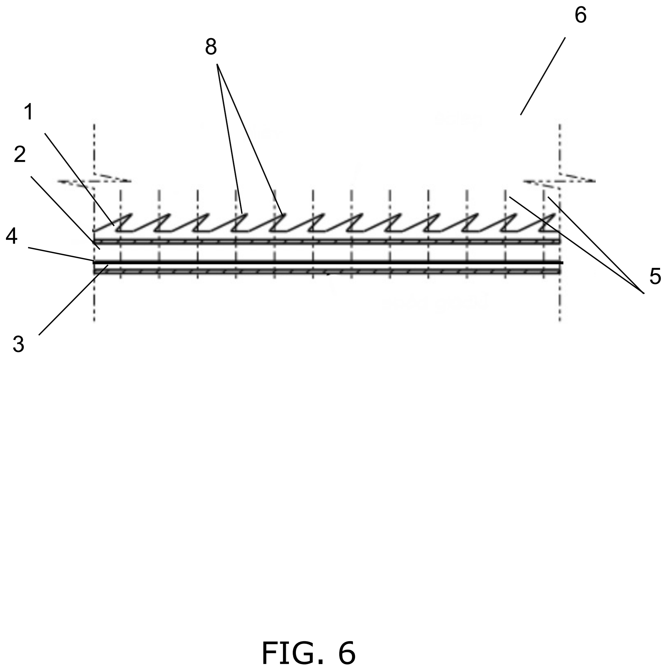

In an alternative method embodiment, the bottom layer is bonded to the inner layer, after which the top layer is applied, and the entire assembly is stitched. Optionally, in this variant, the stitching may be performed using a chain stitch without pleating the top layer, or as shown in Fig. 6, with a pleat 8 in the top layer. Alternatively, the stitching may be performed using a lockstitch.

The pleating and application of the anti-slip coating can be performed in any order.

### List of figure references:

- 1 -: top linen layer,
- 2 -: inner linen layer,
- 3 -: bottom linen layer,
- 4 -: adhesive layer,
- 5 -: seams,
- 6 -: insert,
- 7 -: binding,
- 8 -: pleat.

## Claims

1. A shoe insert **characterized in that** it comprises a top linen layer (1) made of a flat-laid linen fabric having a basis weight of 100-200 g/m², an inner linen layer (2) made of a flat-laid linen fabric having a basis weight of 300-600 g/m², and a bottom linen layer (3) bonded to the inner linen layer (2) wherein at least the top linen layer (1) and the inner linen layer (2) are stitched together by seams (5) formed using machine stitching, and the bottom linen layer (3) is a layer of linen fabric having a basis weight of 200-300 g/m² and is coated with an anti-slip substance on the side opposite the side connected to the inner linen layer.

2. The shoe insert according to claim 1, **characterized in that** the bottom linen layer (3) is bonded to the inner linen layer (2) with an adhesive layer (4) and/or the top linen layer (1), the inner linen layer (2), and the bottom linen layer (3) are bonded by stitching.

3. The shoe insert according to claim 1-2, **characterized in that** the layers are stitched using a chain stitch and/or a lockstitch.

4. The shoe insert according to claim 1-3, **characterized in that** the seams (5) are made parallel to one another or non-parallel to one another, preferably at an angle, at any desired inclination, preferably the seams (5) are formed as straight, curved, rounded, oblique, or zigzag lines.

5. The shoe insert according to claim 1-4, **characterized in that** at least the top linen layer (1) and the inner linen layer (2) are stitched together with parallel seams (5), even more preferably the seams (5) are made along the longitudinal axis of the insert.

6. The shoe insert according to claim 1-5, **characterized in that** the insert (6) comprises parallel seams (5) made at intervals of 4 mm to 10 mm from each other, more preferably the insert (6) comprises parallel seams (5) made at intervals of 4 mm to 7 mm from each other, even more preferably the insert (6) comprises parallel seams (5) made at intervals 4,8 mm or 5,6 mm or 6,4 mm from each other.

7. The shoe insert according to claim 1-6, **characterized in that** the insert (6) comprises seems (5) extending transversely or obliquely to the longitudinal axis of the insert, preferably arranged parallel to one another.

8. The shoe insert according to claim 1-7, **characterized in that** the insert (6) comprises an adhesive layer (4), which is a copolymer nonwoven, and/or the shoe insert comprises anti-slip substance that is biodegradable.

9. The shoe insert according to claim 1-8, **characterized in that** the top linen layer (1) is made of a linen fabric having a basis weight of 100-150 g/m², preferably the top linen layer (1) is made of a linen fabric having a basis weight of 120 g/m².

10. The shoe insert according to claim 1-9, **characterized in that** the insert (6) comprises the inner linen layer (2) having a basis weight of 420 g/m² or 500 g/m².

11. The shoe insert according to claim 1-10, **characterized in that** the insert (6) comprises the bottom linen layer (3) having a basis weight of 220 g/m².

12. The shoe insert according to claim 1-11, **characterized in that** the edge of the insert (6) is finished with a binding (7), and/or the top layer is pleated (8).

13. A method for manufacturing a shoe insert, **characterized in that** it comprises the steps:
a. application of anti-slip substance in the form of a film on the bottom linen layer (3);
b. binding the top linen layer (1), the inner linen layer (2), and the bottom linen layer (3) by machine stitching at least the top and the inner linen layers, and gluing the bottom linen layer (3) by the side opposite the side on which the anti-slip substance was applied to, to the inner linen layer (2), or by machine-stitching all three layers together (1,2,3);
c. cutting the bonded layers (1, 2, 3) into the shape of the insert (6) using a cutting machine.

14. The method for manufacturing a shoe insert according to claim 13, **characterized in that** it comprises the steps:
a. application of anti-slip substance in the form of a film on the bottom linen layer (3);
b. binding the top linen layer (1) with the inner linen layer (2) by machine stitching, preferably using a chain stitch;
c. application of the adhesive layer (4) on the bottom linen layer (3) by the side opposite to the side on which the anti-slip substance was applied to;
d. joining the layer assembly obtained in step (b) (1,2) to the bottom linen layer (3) in such a way that the inner linen layer (2) is connected, by the side opposite to the side adjacent to the top linen layer (1), with the bottom linen layer (3) from the adhesive layer (4) side, and the joining is done by heat sealing and pressing at a temperature of 180-200 degrees;
e. cutting the bonded layers (1, 2, 3) into the shape of the insert (6); and/or
f. trimming with a binding (7).

15. The method for manufacturing a shoe insert according to claims 13-14, **characterized in that** the stitching is performed using a chain stitch or a lockstitch, and/or the method further comprises a step of pleating at least the top linen layer by applying seams, preferably using a chain stitch, to form pleats (8).
